(19) **Europäisches Patentamt / European Patent Office / Office européen des brevets**

(11) **EP 3 293 646 A1**

(12) **EUROPEAN PATENT APPLICATION**

(43) Date of publication:
**14.03.2018 Bulletin 2018/11**

(51) Int Cl.:
***G06F 17/30*** *(2006.01)*

(21) Application number: **17189557.6**

(22) Date of filing: **06.09.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **09.09.2016 RU 2016136414**
**29.05.2017 US 201715607555**

(71) Applicant: **Yandex Europe AG**
**6005 Luzern (CH)**

(72) Inventors:
• **Lifar, Igor Igorevich**
  **353960 Novorossiysk, Krasnodar region (RU)**
• **Lamburt, Victor Grigorievich**
  **117465 Moscow (RU)**

(74) Representative: **Vossius, Corinna**
**Corinna Vossius IP Group**
**Patent- und Rechtsanwaltskanzlei**
**Widenmayerstrasse 43**
**80538 München (DE)**

(54) **METHOD AND SERVER FOR TRAINING A MACHINE LEARNING ALGORITHM (MLA) FOR CONTENT RECOMMENDATION GENERATION**

(57)    A method of training machine learning algorithm for selecting recommended content for a user of an electronic device is provided. The method is executable by a recommendation server accessible by the electronic device via a communication network, the recommendation server executing the machine learning algorithm, once trained. The method comprises: acquiring an indication of a plurality of user-item interactions, each user-item interaction being associated with a user and a digital item; based on the plurality of user-item interactions, generating a matrix of user-item relevance scores; factorizing the matrix of user-item relevance scores into a user matrix and an item matrix, said factorizing including: initializing the item matrix using item vectors, the item vectors having been generated such that digital items with similar content have similar item vectors, initializing the user matrix with user-vectors; iteratively optimizing of the user matrix and the item matrix; and storing the optimized item matrix.

FIG. 6

## Description

### FIELD

The present technology relates to recommendation systems in general and specifically to a method and a server for training a machine learning algorithm (MLA) for generating a content recommendation.

### BACKGROUND

Various global or local communication networks (the Internet, the World Wide Web, local area networks and the like) offer a user a vast amount of information. The information includes a multitude of contextual topics, such as but not limited to, news and current affairs, maps, company information, financial information and resources, traffic information, games and entertainment related information. Users use a variety of client devices (desktop, laptop, notebook, smartphone, tablets and the like) to have access to rich content (like images, audio, video, animation, and other multimedia content from such networks).

The volume of available information through various Internet resources has grown exponentially in the past couple of years. Several solutions have been developed in order to allow a typical user to find the information that the user is looking for. One example of such a solution is a search engine. Examples of the search engines include GOOGLE™ search engine, YANDEX™ search engine, YAHOO! ™ search engine and the like. The user can access the search engine interface and submit a search query associated with the information that the user is desirous of locating on the Internet. In response to the search query, the search engine provides a ranked list of search results. The ranked list of search results is generated based on various ranking algorithms employed by the particular search engine that is being used by the user performing the search. The overall goal of such ranking algorithms is to present the most relevant search results at the top of the ranked list, while less relevant search results would be positioned on less prominent positions of the ranked list of search results (with the least relevant search results being located towards the bottom of the ranked list of search results).

The search engines typically provide a good search tool for a search query that the user knows *a priori* that she/he wants to search. In other words, if the user is interested in obtaining information about the most popular destinations in Spain (i.e. a known search topic), the user could submit a search query: "The most popular destinations in Spain?" The search engine will then present a ranked list of Internet resources that are potentially relevant to the search query. The user can then browse the ranked list of search results in order to obtain information she/he is interested in as it relates to places to visit in Spain. If the user, for whatever reason, is not satisfied with the search results, the user can re-run the search, for example, with a more focused search query, such as "The most popular destinations in Spain in the summer?", "The most popular destinations in the South of Spain?", "The most popular destinations for a culinary getaway in Spain?".

There is another approach that has been proposed for allowing the user to discover content and, more precisely, to allow for discovering and/or recommending content that the user may not be expressly interested in searching for. Such systems recommend content to the user without an express search request based on explicit or implicit interests of the user.

An example of such a system is a FLIPBOARD™ recommendation system, which system aggregates and recommends content from various social networks. The FLIPBOARD recommendation system presents the uncovered content in a "magazine style" format, where the user can "flip" through the pages with the recommended / aggregated content. The recommendation system collects content from social media and other websites, presents it in magazine format, and allows users to "flip" through their social-networking feeds and feeds from websites that have partnered with the company, effectively "recommending" content to the user even though the user may not have expressly expressed her/his desire in the particular content.

Another example of the recommendation system is a YANDEX.ZEN™ recommendation system. The Yandex.Zen recommendation system recommends digital content (such as articles, news, and video) in a personalized feed on the Yandex.Browser start screen. As the user browses the Yandex.Zen server recommended content, the server acquires explicit (by asking whether the user likes to see more of such content in the user's feed) or implicit (by observing user content interactions) feedback. Using the user feedback, the Yandex.Zen server continuously improves the content recommendations presented to the given user.

In order to generate the ranked search results in a search engine system or a list of recommended resources in a typical recommendation system, the respective system utilizes a machine learning algorithm to select search results and/or recommended content. There are several machine learning algorithms known in the art and utilized by search engines and/or recommendation systems. As is known, a typical machine learning algorithm is first "trained" using a training set (whether marked or unmarked) to generate a machine learning algorithm formula, which is then applied to determine at run time an output based on the system inputs.

In the typical recommendation system, the trained machine learning algorithm of the recommendation system selects a number of potential recommended items from a number of potential sources for the recommended items (for a particular user). Typically, the machine learning algorithm associated with such a recommendation system, acquires (over time) knowledge about various potential sources of content items, past-user interactions with the various potential sources of content items (as well as generated recommendations) and uses this knowledge to generate a recommendation for the particular user of the recommendation system.

One of the algorithms used for generating content recommendation is collaborative filtering. The collaborative filtering approach is based on relevancy scores that are calculated based on prior interactions of a plurality of users with a plurality of digital items. These interactions can be associated with explicit or implicit user feedback that is used for generating a given relevancy score for a given interaction of a given user with a given digital item.

For building recommendation systems, a dataset with relevancy scores associated with various potentially recommendable digital items is used as a matrix for processing. This matrix is typically rather sparse (i.e. not every digital item has been interacted with by enough users and not every user has interacted with each potentially recommendable digital item). A typical prior art approach involves factorizing the matrix to populate the missing relevancy scores.

In linear algebra, matrix factorization can be done via Singular Value Decomposition (or SVD for short). In accordance with the SVD algorithm any matrix can be presented as factorization expressed as:

$$\underset{n\times m}{A'} = \underset{n\times d}{U'} \times \underset{d\times d}{\Sigma'} \times \underset{d\times m}{V'^{T}} \qquad \textbf{(Formula 1)}$$

As a result of applying the SVD algorithm, a typical matrix of relevancy scores (that are based on user-digital-items interactions) can be split into a user matrix and a digital item matrix.

When building the recommendation system, approximate matrix factorization is typically used. There are two commonly used approaches to execute the approximate matrix factorization: gradient descent and Alternating Least Squares (ALS). The ALS approach allows considering both explicit and implicit feedback therefore for recommendation services.

Broadly speaking, the ALS approach can be summarized as follows. The matrix of relevancy scores (R) is presented as $R \approx UV^T$. In accordance with a typical ALS approach, the values for the initial U and V matrices are randomly selected or are filled with zeros. The ALS then iterates two steps: the U-step fixes V and adjusts U, the V-step fixes U and adjusts V. After each iteration, the factorization of U and V becomes closer to R.

US patent application 2015/0052003 discloses a method of providing personalized item recommendations using scalable matrix factorization with randomness. Other embodiments of related systems and methods are also disclosed.

US patent 8,983,888 discloses a technique for efficiently factoring a matrix in a recommendation system. Usage data for a large set of users relative to a set of items is provided in a usage matrix R. To reduce computational requirements, the usage matrix is sampled to provide a reduced matrix R'. R' is factored into a user matrix U' and an item matrix V. User vectors in U' and V are initialized and then iteratively updated to arrive at an optimal solution. The reduced matrix can be factored using the computational resources of a single computing device, for instance. Subsequently, the full user matrix U is obtained by fixing V and analytically minimizing an error in UV=R+error. The computations of this analytic solution can be divided among a set of computing devices, such as by using a map and reduce technique. Each computing device solves the equation for different respective subset of users.

US 8,676,736 discloses a system and method of providing personalized item recommendations in a communication system comprising a server and a plurality of client devices. At the server, a plurality of user rating vectors are received from a plurality of client devices and aggregated into a rating matrix that is factorized into a user feature matrix and an item feature matrix, with the product of the user feature and item feature matrices approximating the user rating matrix. The factorization comprises the steps of the ALS1 or the IALS1 algorithm including: initializing the user feature matrix and the item feature matrix with predefined initial values; alternately optimizing the user feature matrix and the item feature matrix until a termination condition is met. The item feature matrix is transmitted from the server to at least one client device, and a predictive rating vector is generated as the product of the associated user feature vector and the item feature matrix. At least one item is selected for recommendation to a user from the items associated with the predictive rating vector.

Article entitled "Fast ALS-based Matrix Factorization for Explicit and Implicit Feedback Datasets" by Pilszy et al, presented during RecSys conference September 26-30, 2010 (Barcelona, Spain) discusses ALS as factorization algorithm for both explicit and implicit feedback based recommendation systems.

**SUMMARY**

It is an object of the present technology to ameliorate at least some of the inconveniences present in the prior art. Embodiments of the present technology may provide and/or broaden the scope of approaches to and/or methods of achieving the aims and objects of the present technology.

Embodiments of the present technology have been developed based on developers' appreciation that the machine learning algorithms (or specific algorithms used for training the machine learning algorithms) used for the selection of the recommended content can be very computer processing resource consuming. Without wishing to be bound to any specific theory, developers of the present technology believe that random selection of initial matrices for the ALS approximation results in the overall process being a time and computational resource consuming operation. Same applies to the zero-based initialization of the initial matrices for the ALS approximation.

Broadly speaking, embodiments of the present technology aim to optimize ALS approximation of matrix factorization for recommendation system. More specifically, embodiments of the present technology have been developed based on developers' appreciation that when ALS algorithm is used, an initial item matrix can be filled with item vectors that are at least partially representative of actual digital items and are at least an approximation to a set of latent factors of digital items. In at least some embodiments of the present technology, the ALS will require fewer iterations to approximate factorization with a pre-determined precision. In other words, obtaining a pre-determined precision for the factorization with the ALS will require fewer iterations. In some embodiments, less time will be required to execute the approximate factorization. In other embodiments, less computational power is required to execute the approximate factorization.

Broadly speaking, a server (such as a recommendation system server) first acquires logs of users' interactions with a plurality of digital items. In some embodiments, the plurality of digital items can be text based, such as articles, books, other texts, and the like. The logs contain indications of user interactions with the plurality of digital items (or to be precise, an indication of certain users with the respective interacted digital items, as well as the nature of their interaction). In some embodiments of the present technology, the interaction can include an explicit user feedback in regard to the digital item (such as a "like"), while in other embodiments, the interaction may lack explicit user feedback. However, the user interaction may have implicit user feedback (for example, the number of time the user spent interacting with the digital item, the number of "shares" of the digital item by the user, the number of comments the user has left in association with the digital item, etc.).

The server can then transform the indication of user interactions into a matrix of user-item relevance scores. The user-item relevance scores can be generated based on the indication of multiple users with a given digital item. The type of user interaction is not limited and can be (but is not limited to): time spent interacting with the digital item, downloading the digital item, sharing the digital item, reposting the digital item, bookmarking the digital item, uploading a comment associated with the digital item, liking the digital item, and updating the digital item. Based on the indication of user interactions, the server determines how relevant a given digital resource is to a given user (the given user having a given user profile).

The server can then execute factorization of the matrix of user-items relevance scores. More specifically, the server can use the SVD algorithm to split the matrix of user-items relevance scores into a user matrix and an item matrix. Embodiments of the present technology executes the ALS algorithm to factorize the matrix of user-items relevance scores. In accordance with embodiments of the present technology, during initialization of the initial matrices for ALS algorithm, the initial item matrix is populated with item vectors that are representative of the actual digital items. In those embodiments where the digital items are text based, the item vectors are representative of the text of the text-based digital items.

The item vectors of text-based digital items can be generated by word embedding techniques. The type of the word embedding techniques is not limited, and some examples include but are not limited to: word2vec or Latent Dirichlet Allocation (LDA) algorithms. Generally speaking, the selected one or more word embedding algorithms are configured to create an item vector such that item vectors of digital items that have similar texts are generally similar. In other words, the selected one or more word embedding techniques ensure that similar text-based digital items get mapped into similar item vectors (i.e. item vectors that are proximate in a multi-dimensional space that is used for mapping digital documents to item vectors).

The initializing the user matrix with user-vectors can be executed in a standard manner, i.e. using random values for initial user-vectors, using zeroes as initial user-vectors, etc.

The server can then iteratively optimize the user matrix and the item matrix. Once optimized, the server can store the optimized item matrix. In order to do so, the server is configured to iteratively: (i) first fix the user matrix and adjust the item matrix and (ii) then fix the item matrix and adjust the user matrix (a "single iteration"). After each single iteration, the factorization of the user matrix and the item matrix becomes closer to the matrix of the user-item relevance scores.

According to a first broad aspect of the present technology, there is provided a method of training a machine learning algorithm for selecting recommended content for a user of an electronic device, the method executable by a recommendation server accessible by the electronic device via a communication network, the recommendation server executing the machine learning algorithm, once trained. The method comprises: acquiring an indication of a plurality of user-item interactions, each user-item interaction being associated with a user and a digital item; based on the plurality of user-item interactions, generating a matrix of user-item relevance scores; factorizing the matrix of user-item relevance scores into a user matrix and an item matrix, said factorizing including: initializing the item matrix using item vectors, the item vectors having been generated such that digital items with similar content have similar item vectors, initializing the user matrix with user-vectors; iteratively optimizing of the user matrix and the item matrix; storing the optimized item matrix.

In some embodiments of the method, the method further comprises: upon receiving, from the electronic device, a request for recommended content, retrieving a user profile associated with the electronic device; and selecting at least one recommended content item, the selecting being made on the basis of a user profile and the optimized item matrix.

In some embodiments of the method, the selecting comprises restoring a user-item matrix of scores using optimized item matrix and the user profile to generate a restored user-item matrix.

In some embodiments of the method, each user-item pair of the restored user-item matrix is associated with a respective user-item relevance score, the respective user-item relevance score being representative of a relevancy of a given digital item to the user.

In some embodiments of the method, the user profile is a vector generated based on the user's browsing history.

In some embodiments of the method, the initializing the user matrix with user-vectors comprises populating the user matrix using random initial user-vector values.

In some embodiments of the method, the initializing the user matrix with user-vectors comprises populating the user matrix using initial user-vector values being zero.

In some embodiments of the method, after the iteratively optimizing, the user matrix is discarded.

In some embodiments of the method, the digital item is a text-based digital item and the item vectors have been generated using a word embedding technique. The word embedding technique can be at least one of word2vec technique and Latent Dirichlet Allocation (LDA) technique. In some embodiments of the method, the factorizing is executed using Singular Value Decomposition (SVD) analysis.

The factorizing can further comprise a decomposition analysis, the decomposition analysis being executed using an Alternating Least Squares (ALS) algorithm. In some embodiments of the method, the acquiring an indication of the plurality of user-item interactions comprises retrieving the indication of the plurality of user-item interactions from user browsing histories.

In some embodiments of the method, the user-item interaction comprises at least one of: time spent interacting with the digital item, downloading the digital item, sharing the digital item, reposting the digital item, bookmarking the digital item, uploading a comment associated with the digital item, liking the digital item, and updating the digital item.

In some embodiments of the method, the iteratively optimizing of the user matrix and the item matrix is executed until a pre-determined value of a pre-determined metric is obtained.

In some embodiments of the method, the pre-determined metric is one of: Root Mean Square Deviation (RMSE) and Mean Absolute Error (MAR).

In accordance with another broad aspect of the present technology, there is provided a server. The server is for training a machine learning algorithm for selecting recommended content for a user of an electronic device. The server comprises: a data storage medium: a network interface configured for communication over a communication network; a processor operationally coupled to the data storage medium and the network interface, the processor configured to: acquire an indication of a plurality of user-item interactions, each user-item interaction being associated with a user and a digital item; based on the plurality of user-item interactions, generate a matrix of user-item relevance scores; factorize the matrix of user-item relevance scores into a user matrix and an item matrix, said factorizing including: initializing the item matrix using item vectors, the item vectors having been generated such that digital items with similar content have similar item vectors, initializing the user matrix with user-vectors; iteratively optimize of the user matrix and the item matrix; store the optimized item matrix in the data storage medium.

In the context of the present specification, a "server" is a computer program that is running on appropriate hardware and is capable of receiving requests (e.g., from client devices) over a network, and carrying out those requests, or causing those requests to be carried out. The hardware may be one physical computer or one physical computer system, but neither is required to be the case with respect to the present technology. In the present context, the use of the expression a "server" is not intended to mean that every task (e.g., received instructions or requests) or any particular task will have been received, carried out, or caused to be carried out, by the same server (i.e., the same software and/or hardware); it is intended to mean that any number of software elements or hardware devices may be involved in receiving/sending, carrying out or causing to be carried out any task or request, or the consequences of any task or request; and all of this software and hardware may be one server or multiple servers, both of which are included within the expression "at least one server".

In the context of the present specification, "client device" is any computer hardware that is capable of running software appropriate to the relevant task at hand. Thus, some (non-limiting) examples of client devices include personal computers (desktops, laptops, netbooks, etc.), smartphones, and tablets, as well as network equipment such as routers, switches, and gateways. It should be noted that a device acting as a client device in the present context is not precluded from acting as a server to other client devices. The use of the expression "a client device" does not preclude multiple client devices being used in receiving/sending, carrying out or causing to be carried out any task or request, or the consequences of any task or request, or steps of any method described herein.

In the context of the present specification, a "database" is any structured collection of data, irrespective of its particular structure, the database management software, or the computer hardware on which the data is stored, implemented or otherwise rendered available for use. A database may reside on the same hardware as the process that stores or makes use of the information stored in the database or it may reside on separate hardware, such as a dedicated server or plurality of servers.

In the context of the present specification, the expression "information" includes information of any nature or kind whatsoever capable of being stored in a database. Thus information includes, but is not limited to audiovisual works (images, movies, sound records, presentations etc.), data (location data, numerical data, etc.), text (opinions, comments, questions, messages, etc.), documents, spreadsheets, lists of words, etc.

In the context of the present specification, the expression "component" is meant to include software (appropriate to a particular hardware context) that is both necessary and sufficient to achieve the specific function(s) being referenced.

In the context of the present specification, the expression "computer usable information storage medium" is intended to include media of any nature and kind whatsoever, including RAM, ROM, disks (CD-ROMs, DVDs, floppy disks, hard drivers, etc.), USB keys, solid state-drives, tape drives, etc.

In the context of the present specification, the words "first", "second", "third", etc. have been used as adjectives only for the purpose of allowing for distinction between the nouns that they modify from one another, and not for the purpose of describing any particular relationship between those nouns. Thus, for example, it should be understood that, the use of the terms "first server" and "third server" is not intended to imply any particular order, type, chronology, hierarchy or ranking (for example) of/between the server, nor is their use (by itself) intended imply that any "second server" must necessarily exist in any given situation. Further, as is discussed herein in other contexts, reference to a "first" element and a "second" element does not preclude the two elements from being the same actual real-world element. Thus, for example, in some instances, a "first" server and a "second" server may be the same software and/or hardware, in other cases they may be different software and/or hardware.

Implementations of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of implementations of the present technology will become apparent from the following description, the accompanying drawings and the appended claims.

BRIEF DESCRIPTION OF THE DRAWINGS

For a better understanding of the present technology, as well as other aspects and further features thereof, reference is made to the following description which is to be used in conjunction with the accompanying drawings, where:

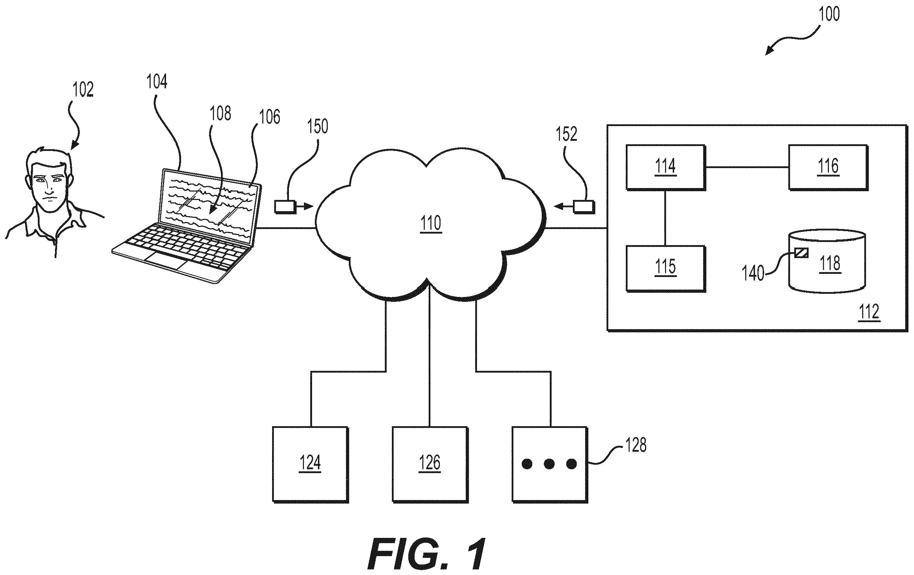

Figure 1 depicts a system suitable for implementing non-limiting embodiments of the present technology.

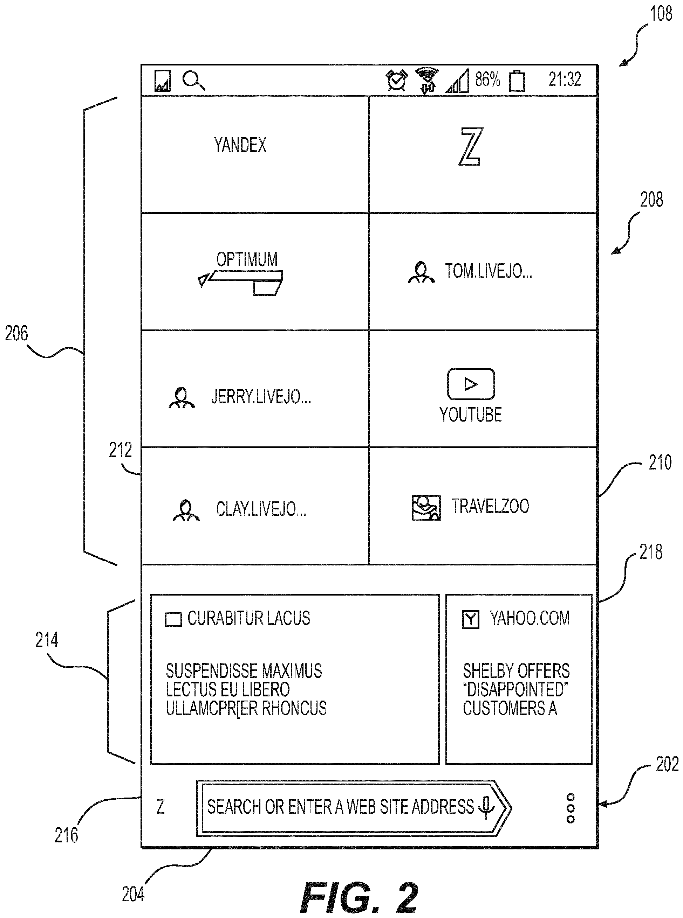

Figure 2 depicts a screen shot of a recommendation interface implemented in accordance with a non-limiting embodiment of the present technology, the recommendation interface being depicted as displayed on the screen of an electronic device of the system of Figure 1, the electronic device being implemented as a smart phone.

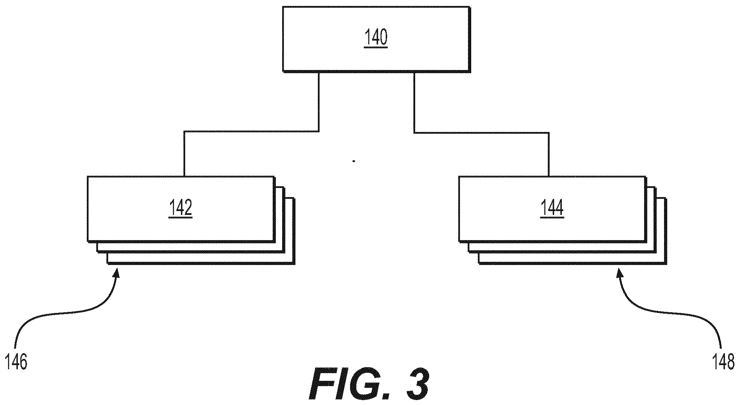

Figure 3 depicts a schematic representation of a plurality of user-item interactions (each user-item interaction being associated with a user and a digital item, the plurality of user-item interactions being processed by the system of Figure 1 in accordance with some non-limiting embodiments of the present technology.

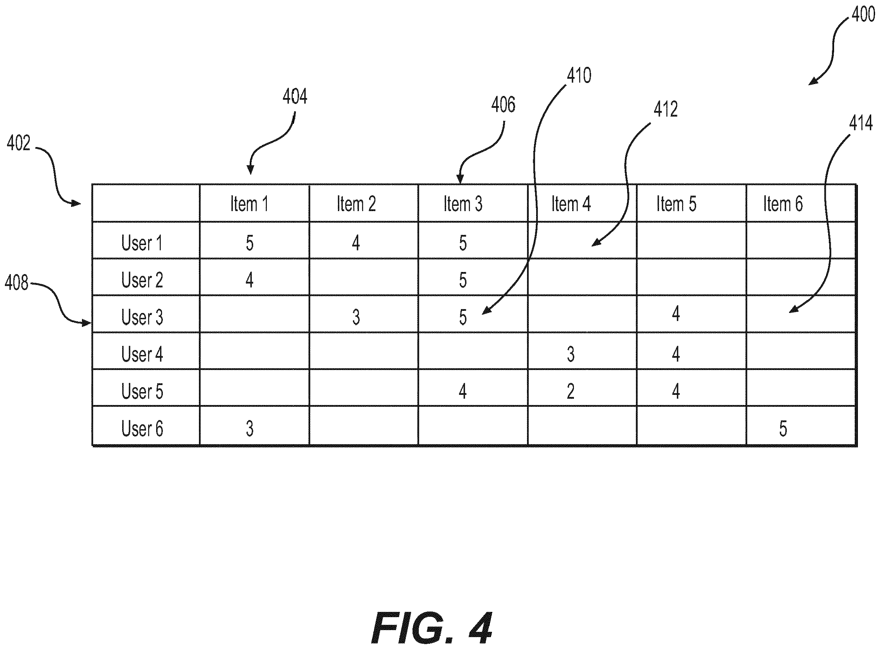

Figure 4 depicts a schematic representation of a matrix of user-item relevance scores, the matrix of user-item relevance scores generated by a server of the system of Figure 1 using the plurality of user-item interactions similar to those depicted in Figure 3, the matrix of user-item relevance scores being implemented in accordance with non-limiting embodiments of the present technology.

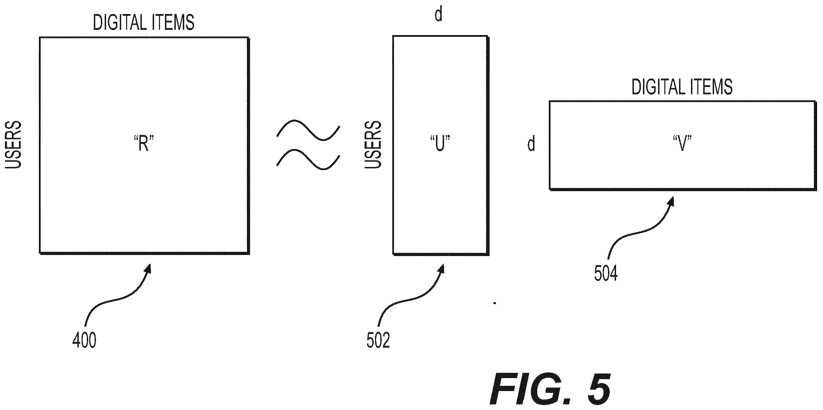

Figure 5 depicts a schematic illustration of a process of factorizing of the matrix of user-item relevance scores into a user matrix and an item matrix, the process being executed by the server of the system of Figure 1 in accordance with some non-limiting embodiments of the present technology.

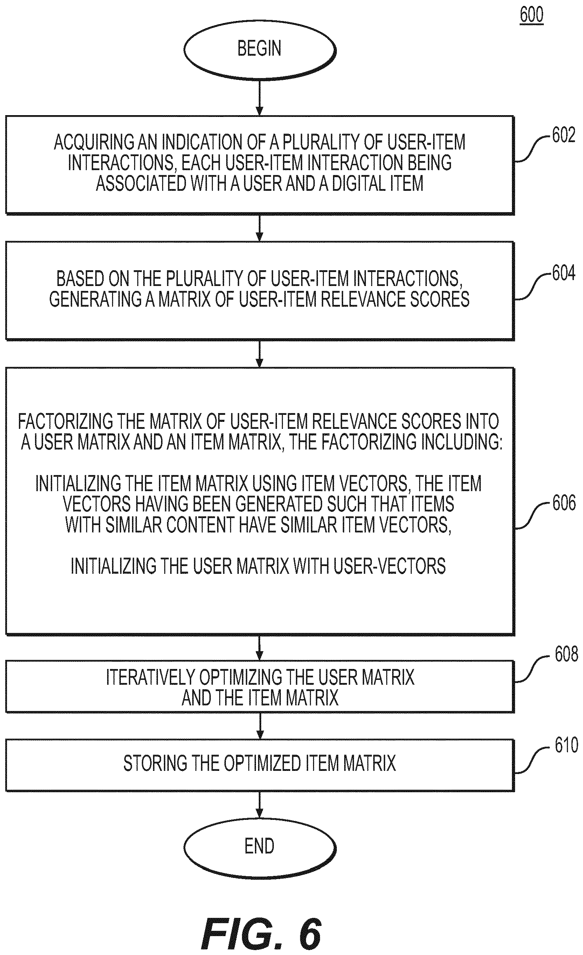

Figure 6 depicts a block diagram of a flow chart of a method training a machine learning algorithm, the method executable by the server of the system of Figure 1 in accordance with some of the non-limiting embodiments of the present technology.

DETAILED DESCRIPTION

Referring to Figure 1, there is shown a schematic diagram of a system 100, the system 100 being suitable for implementing non-limiting embodiments of the present technology. It is to be expressly understood that the system 100 as depicted is merely an illustrative implementation of the present technology. Thus, the description thereof that follows is intended to be only a description of illustrative examples of the present technology. This description is not intended to define the scope or set forth the bounds of the present technology. In some cases, what are believed to be helpful examples of modifications to the system 100 may also be set forth below. This is done merely as an aid to understanding, and, again, not to define the scope or set forth the bounds of the present technology. These modifications are not an exhaustive list, and, as a person skilled in the art would understand, other modifications are likely possible. Further, where this has not been done (i.e., where no examples of modifications have been set forth), it should not be interpreted that no modifications are possible and/or that what is described is the sole manner of implementing that element of the present technology. As a person skilled in the art would understand, this is likely not the case. In addition it is to be understood that the system 100 may provide in certain instances simple implementations of the present technology, and that where such is the case they have been presented in this manner as an aid to understanding. As persons skilled in the art would understand, various implementations of the present technology may be of a greater complexity.

Generally speaking, the system 100 is configured to provide content recommendations to a user 102 of the system 100. The user 102 may be a subscriber to a recommendation service provided by the system 100. However, the subscription does not need to be explicit or paid for. For example, the user 102 can become a subscriber by virtue of downloading a recommendation application from the system 100, by registering and provisioning a log-in / password combination, by registering and provisioning user preferences and the like. As such, any system variation configured to generate content recommendations for the given user can be adapted to execute embodiments of the present technology, once teachings presented herein are appreciated. Furthermore, the system 100 will be described using an example of the system 100 being a recommendation system (therefore, the system 100 can be referred to herein below as a "recommendation system 100" or a "prediction system 100" or a "training system 100"). However, embodiments of the present technology can be equally applied to other types of the systems 100, as will be described in greater detail herein below.

The system 100 comprises an electronic device 104, the electronic device 104 being associated with the user 102. As such, the electronic device 104 can sometimes be referred to as a "client device", "end user device" or "client electronic device". It should be noted that the fact that the electronic device 104 is associated with the user 102 does not need to suggest or imply any mode of operation - such as a need to log in, a need to be registered, or the like.

The implementation of the electronic device 104 is not particularly limited, but as an example, the electronic device 104 may be implemented as a personal computer (desktops, laptops, netbooks, etc.), a wireless communication device (such as a smartphone, a cell phone, a tablet and the like), as well as network equipment (such as routers, switches, and gateways). The electronic device 104 comprises hardware and/or software and/or firmware (or a combination thereof), as is known in the art, to execute a recommendation application 106. Generally speaking, the purpose of the recommendation application 106 is to enable the user to receive (or otherwise access) content recommendations provided by the system 100, as will be described in greater detail herein below.

How the recommendation application 106 is implemented is not particularly limited. One example of the recommendation application 106 may include a user accessing a web site associated with a recommendation service to access the recommendation application 106. For example, the recommendation application 106 can be accessed by typing in (or otherwise copy-pasting or selecting a link) an URL associated with the recommendation service. Alternatively, the recommendation application 106 can be an app downloaded from a so-called app store, such as APPSTORE™ or GOOGLEPLAY™ and installed/executed on the electronic device 104. It should be expressly understood that the recommendation application 106 can be accessed using any other suitable means. In yet additional embodiments, the recommendation application 106 functionality can be incorporated into another application, such as a browser application (not depicted) or the like. For example, the recommendation application 106 can be executed as part of the browser application, for example, when the user 102 first start the browser application, the functionality of the recommendation application 106 can be executed.

Generally speaking, the recommendation application 106 comprises a recommendation interface 108, the recommendation interface 108 being displayed on a screen (not separately numbered) of the electronic device 104. With reference to Figure 2, there is depicted a screen shot of the recommendation interface 108 implemented in accordance with a non-limiting embodiment of the present technology (the example of the recommendation interface 108 being depicted as displayed on the screen of the electronic device 104 being implemented as a smart phone).

In some embodiments of the present technology the recommendation interface 108 is presented when the user 102 of the electronic device 104 actuates (i.e. executes, run, background-run or the like) the recommendation application 106. Alternatively, the recommendation interface 108 can be presented when the user 102 opens a new browser window and/or activates a new tab in the browser application. For example, in some embodiments of the present technology, the recommendation interface 108 can act as a "home screen" in the browser application.

The recommendation interface 108 includes a search interface 202. The search interface 202 includes a search query interface 204. The search query interface 204 can be implemented as an "omnibox" which allows entry of a search query for executing a search or a network address (such as a Universal Remote Locator) for identifying a network resource (such as a web site) to be accessed. However, the search query interface 204 can be implemented as configured to receive one or both of: entry of the search query for executing the search or the network address (such as a Universal Remote Locator) for identifying the network resource (such as a web site) to be accessed.

The recommendation interface 108 further includes a links interface 206. The links interface 206 includes a plurality of tiles 208 - of which eight are depicted in Figure 2 - only two of which are numbered in Figure 2 - a first tile 210 and a second tile 212.

Using the example of the first tile 210 and the second tile 212 - each of the plurality of tiles 208 includes (or acts as) a link to either (i) a web site marked as "favourite" or otherwise marked by the user 102, (ii) a previously visited web site or (iii) the like. The plurality of tiles 208, in the depicted embodiment, is visually presented to the user 102 as square buttons with a logo and/or a name of the resource depicted therein, the logo and the name for enabling the user 102 to identify which resource the particular one of the plurality of tiles (not separately numbered) is linked to. However, it should be expressly understood that the visual representation of some or all of the plurality of tiles 208 can be different. As such, some or all of the plurality of tiles 208 can be implemented as differently shaped buttons, as hyperlinks presented in a list or the like.

As an example, the first tile 210 contains a link to a TRAVELZOO™ web site and the second tile 212 contains a link to a personal live journal web site. Needless to say, the number and content of the individual ones of the plurality of tiles 208 is not particularly limited.

For example, the number of the tiles within the plurality of tiles 208 can be pre-selected by the provider of the recommendation application 106. In some embodiments of the present technology, the number of tiles within the plurality of tiles 208 is pre-selected based on the size and/or resolution of the screen of the electronic device 104 executing the recommendation application 106. For example, a first number of tiles can be pre-selected for the electronic device 104 executed as a smartphone, a second number of tiles can be pre-selected for the electronic device 104 executed as a tablet, and a third number of tiles can be pre-selected for the electronic device 104 executed as a laptop or desktop computer.

The recommendation interface 108 further includes a recommended content set 214. The recommended content set 214 includes one or more recommended content items, such as a first recommended content item 216 and a second recommended content item 218 (the second recommended content item 218 only partially visible in Figure 2). Naturally, the recommended content set 214 can have more recommended content items. In the embodiment depicted in Figure 2 and in those embodiments where more than one recommended content item are present, the user 102 can scroll through the recommended content set 214. The scrolling can be achieved by any suitable means. For example, the user 102 can scroll the content of the recommended content set 214 by means of actuating a mouse device (not depicted), a key board key (not depicted) or interacting with a touch sensitive screen (not depicted) of or associated with the electronic device 104.

Example provided in Figure 2 is just one possible implementation of the recommendation interface 108. Another example of the implementation of the recommendation interface 108, as well as an explanation of how the user 102 can interact with the recommendation interface 108 is disclosed in a co-owned Russian Patent Application entitled **A COMPUTER-IMPLEMENTED METHOD OF GENERATING A CONTENT RECOMMENDATION INTERFACE,** filed on May 12, 2016 and bearing an application number 2016118519; content of which is incorporated by reference herein in its entirety.

How the content for the recommended content set 214 is generated will be described in greater detail herein below.

Returning to the description of Figure 1, the electronic device 104 is communicatively coupled to a communication network 110 for accessing a recommendation server 112. In some non-limiting embodiments of the present technology, the communication network 110 can be implemented as the Internet. In other embodiments of the present technology, the communication network 110 can be implemented differently, such as any wide-area communication network, local-area communication network, a private communication network and the like. A communication link (not separately numbered) between the electronic device 104 and the communication network 110 is implemented will depend *inter alia* on how the electronic device 104 is implemented. Merely as an example and not as a limitation, in those embodiments of the present technology where the electronic device 104 is implemented as a wireless communication device (such as a smartphone), the communication link can be implemented as a wireless communication link (such as but not limited to, a 3G communication network link, a 4G communication network link, Wireless Fidelity, or WiFi® for short, Bluetooth® and the like). In those examples where the electronic device 104 is implemented as a notebook computer, the communication link can be either wireless (such as Wireless Fidelity, or WiFi® for short, Bluetooth® or the like) or wired (such as an Ethernet based connection).

The recommendation server 112 can be implemented as a conventional computer server. In an example of an embodiment of the present technology, the recommendation server 112 can be implemented as a Dell™ PowerEdge™ Server running the Microsoft™ Windows Server™ operating system. Needless to say, the recommendation server 112 can be implemented in any other suitable hardware, software, and/or firmware, or a combination thereof. In the depicted non-limiting embodiments of the present technology, the recommendation server 112 is a single server. In alternative non-limiting embodiments of the present technology, the functionality of the recommendation server 112 may be distributed and may be implemented via multiple servers.

The recommendation server 112 comprises a processing module 114. The processing module 114 is coupled to or otherwise has access to a recommended content selection module 116. The recommended content selection module 116 has access to a data storage device 118. The processing module 114 is further coupled to a content discovery module 115. Operation of the recommendation server 112 and its components will be described herein below in greater detail.

Also coupled to the communication network 110 are multiple network resources, including a first network resource 124, a second network resource 126 and a plurality of additional network resources 128. The first network resource 124, the second network resource 126 and the plurality of additional network resources 128 are all network resources accessible by the electronic device 104 (as well as other electronic devices potentially present in the system 100) via the communication network 110. Respective content of first network resource 124, the second network resource 126 and the plurality of additional network resources 128 is not particularly limited.

A given one of the first network resource 124, the second network resource 126 and the plurality of additional network resources 128 can contain (or in other words, host) digital content (i.e. one or more digital items each of the one or more digital items having one or more types of digital content). In some embodiments of the present technology, the content of the digital items can include but is not limited to: audio content for streaming or downloading, video content for streaming or downloading, news, blogs, information about various government institutions, information about points of interest, thematically clustered content (such as content relevant to those interested in kick-boxing), other multi-media content, and the like.

In other embodiments of the present technology, the content of the digital items hosted by the first network resource 124, the second network resource 126 and the plurality of additional network resources 128 is text-based. Examples of the text-based content items include but are not limited to: news, articles, blogs, information about various government institutions, information about points of interest, thematically clustered content (such as content relevant to those interested in kick-boxing), and the like. It should be noted that "text-based" content does not intend to mean that the given digital item only contains text to the exclusion of other type of multi-media elements. On the contrary, the given text-based digital item includes text elements, as well as potentially other type of multi-media elements. For instance, a given text-based digital item that is an article may have text, as well as photos. As another example, a given text-based digital item that is a blog may include text, as well as embedded video elements.

The content is potentially "discoverable" to the electronic device 104 by various means. For example, the user 102 of the electronic device 104 can use a browser application (not depicted) and enter a Universal Resource Locator (URL) associated with the given one of the first network resource 124, the second network resource 126 and the plurality of additional network resources 128. Alternatively, the user 102 of the electronic device 104 can execute a search using a search engine (not depicted) to discover the content of one or more of the first network resource 124, the second network resource 126 and the plurality of additional network resources 128. As has been mentioned above, these are useful when the user 102 knows *a priori* which content the user 102 is interested in.

In accordance with embodiments of the present technology, the recommendation application 106 can recommend content items available from the given one of the first network resource 124, the second network resource 126 and the plurality of additional network resources 128 to the user 102, the content items that the user 102 may not *a priori* know about. The recommendation server 112 is configured to select content for the one or more recommendation items to be presented to the user 102 via the recommendation application 106. More specifically, the processing module 114 is configured to (i) receive from the electronic device 104 a request for the content recommendation 150 and (ii) responsive to the request, generate a recommended content message 152 specifically customized for the user 102 associated with the electronic device 104. The processing module 114 can further coordinate execution of various routines described herein as performed by the content discovery module 115, and the recommended content selection module 116, for example.

In some embodiments of the present technology, the request for the content recommendation 150 can be generated in response to the user 102 providing an explicit indication of the user desire to receive the content recommendation. For example, the recommendation interface 108 can provide a button (or another actuatable element) to enable the user 102 to indicate her/his desire to receive a new or an updated content recommendation. As a non-limiting example, the recommendation interface 108 can provide an actuatable button that reads "Request a content recommendation". Within these embodiments, the request for the content recommendation 150 can be thought of as "an explicit request" in a sense of the user 102 expressly providing a request for the recommended content.

In other embodiments, the request for the content recommendation 150 can be generated in response to the user 102 providing an implicit indication of the user desire to receive the content recommendation. In some embodiments of the present technology, the request for the content recommendation 150 can be generated in response to the user 102 starting the recommendation application 106.

Alternatively, in those embodiments of the present technology where the recommendation application 106 is implemented as a browser (for example, a GOOGLE™ browser, a YANDEX™ browser, a YAHOO! ™ browser or any other proprietary or commercially available browser application), the request for content recommendation 150 can be generated in response to the user 102 opening the browser application and can be generated, for example, without the user 102 executing any additional actions other than activating the browser application. As another example, the request for content recommendation 150 can be generated in response to the user 102 opening a new tab of the already-opened browser application and can be generated, for example, without the user 102 executing any additional actions other than activating the new browser tab. In other words, the request for the content recommendation 150 can be generated even without the user 102 knowing that the user 102 may be interested in obtaining a content recommendation.

As another example, the request for content recommendation 150 can be generated in response to the user 102 selecting a particular element of the browser application and can be generated, for example, without the user 102 executing any additional actions other than selecting/activating the particular element of the browser application.

Examples of the particular element of the browser application include but are not limited to: an address line of the browser application bar; a search bar of the browser application and/or a search bar of a search engine web site accessed in the browser application; an omnibox (combined address and search bar of the browser application); favourites or recently visited network resources pane; any other pre-determined area of the browser application interface or a network resource displayed in the browser application.

In some embodiments of the present technology, the content discovery module 115 can be configured to execute a "crawler" operation. In other words, the content discovery module 115 can execute a robot that "visits" a plurality of resources (such as the first network resource 124, the second network resource 126 and the plurality of additional network resources 128) and catalogues one or more digital items hosted by a respective one of the first network resource 124, the second network resource 126 and the plurality of additional network resources 128. In some embodiments of the present technology, the content discovery module 115 can catalogue the digital items into an inverted index mapping a given digital item to a list of key words associated with the given digital item.

As part of the crawling function, the recommended content selection module 116 is configured to maintain (in the data storage device 118) information representative of the newly discovered network resources and/or newly discovered content available therefrom. In some embodiments, the recommended content selection module 116 can be configured to maintain an inverted index within the data storage device 118, but the recommended content selection module 116 can arrange the information representative of the newly discovered network resources and/or newly discovered content available therefrom in a data structure other than an inverted index.

In alternative embodiments of the present technology, rather than executing its dedicated content discovery module 115, the recommendation server 112 can share the functionality of content discovery module 115 with another server (not depicted) and/or another service (not depicted). For example, the functionality of the content discovery module 115 can be shared with a search engine server (not depicted) executing a search engine service. When the content discovery module 115 crawls and indexes new resources that may potentially host text-based or other digital items, the content discovery module 115 can also index such newly discovered (or updated) digital items for the purposes of the recommendation server 112 routines described herein.

The recommended content selection module 116 can be configured to execute one or more machine learning algorithms (MLAs). In some embodiments of the present technology, one or more machine learning algorithms can be any suitable semi-supervised or supervised machine learning algorithm, such as but not limited to: artificial neural network, Bayesian statistics, Gaussian process regression, decision trees, and the like.

Generally speaking, the recommended content selection module 116 executes one or more MLAs to analyze the indexed content items (i.e. those discovered and indexed by the content discovery module 115) to select one or more content items as recommended content for the user 102.

It should be noted that even though the content discovery module 115 and the recommended content selection module 116 have been described as separate entities each executing its respective functionalities, in alternative embodiments of the present technology, the functionality executed by the content discovery module 115 and the recommended content selection module 116 can be executed by a single entity (such as the processing module 114, for example). Alternatively, the functionality executed by the content discovery module 115 and the recommended content selection module 116 can be distributed amongst more modules than the ones depicted in Figure 1 and can be executed as part of multiple instances of the recommendation server 112.

Furthermore, each one of the content discovery module 115 and the recommended content selection module 116 can execute additional functions (i.e. others than the respective functions described herein).

With continued reference to Figure 1 and with a brief reference to Figure 3, in accordance with embodiments of the present technology, the recommended content selection module 116 is configured to acquire an indication of a plurality of user-item interactions 140, each user-item interaction of the plurality of user-item interactions 140 being associated with a user 142 and a digital item 144.

In some embodiments of the present technology, the recommended content selection module 116 is configured to acquire the indication of the plurality of user-item interactions 140 from the data storage device 118. In some embodiments of the present technology, the indication of the plurality of user-item interactions 140 may have been tracked and store in the data storage device 118 by the content discovery module 115. For example, the content discovery module 115 may be configured to download logs of a search engine server (not depicted), logs of a browser server (not depicted) and the like. Broadly speaking, the indication of the plurality of user-item interactions 140 can be based on logs of users' browsing activity, logs of users' searching activity, a combination of the two, etc.

In alternative embodiments of the present technology, the recommended content selection module 116 is configured to acquire the indication of a plurality of user-item interactions 140 from an external source (not depicted), such as a search engine log (not depicted), a web browser log (not depicted), and the like.

In some embodiments of the present technology, the digital item 144 may be one of a plurality of digital items 163. Generally speaking, any single digital item 144 of the plurality of digital items 163 may include any digital content (such as video, audio, text, combination thereof, etc.). In a specific non-limiting embodiment, any single digital item 144 of the plurality of digital items 163 may include text based content, such as articles, books, other texts, and the like.

In some embodiments of the present technology, the user 142 may be one of a plurality of users 148 (including the user 102).

The given indication of the plurality of user-item interactions 140 can be one or more of: time spent interacting with the digital item 144, downloading the digital item 144, sharing the digital item 144, reposting the digital item 144, bookmarking the digital item 144, uploading a comment associated with the digital item 144, liking the digital item 144, and updating the digital item 144.

It is noted that a given digital item 144 from the plurality of the digital items 163 may have been interacted with by a number of the users 142 from the plurality of users 148. By the same token, a given user 142 from the plurality of users 148 may have interacted with more than one of the digital items 144 of the plurality of the digital items 163. Naturally, the given user 142 from the plurality of users 148 may have interacted with a single digital item 144 of the plurality of the digital items 163 more than once.

It may also happen that a given user 142 from the plurality of users 148 may have not interacted with all of the digital items 144 of the plurality of the digital items 163. By the same token, it may happen that a given digital item 144 from the plurality of the digital items 163 may not have been interacted with by all users 142 from the plurality of users 148.

The recommended content selection module 116 is further configured, based on the plurality of user-item interactions 140, to determine how relevant a given digital item 144 is to a given user 142. More specifically, recommended content selection module 116 is configured, based on the plurality of user-item interactions 140, to generate a matrix of user-item relevance scores.

With reference to Figure 4, there is depicted a schematic representation of a matrix of user-item relevance scores 400. The depicted matrix of user-item relevance scores 400 contains a plurality of columns 404 to a plurality of rows 402. Each column of the plurality of columns 404 is associated with a given digital item 144 of the plurality of the digital items 163. Each row of the plurality of rows 402 is associated with a given user 142 from the plurality of users 148.

An intersection between a given row of the plurality of rows 402 and a given column of the plurality of columns 404 stores a user-item relevancy score of the associated given user 142 from the plurality of users 148 and the associated given digital item 144 of the plurality of the digital items 163. For example, a particular row 408 is associated with user "User 3" and a particular column 406 is associated with digital item "Item 3", and a particular cell 410 contains a relevancy score of "5" indicative of the user-interactions of the "User 3" with the digital item "Item 3" being indicative of the relevancy score of "5". How the relevancy score is generated by the recommended content selection module 116 is not particularly limited. As an example, the recommended content selection module 116 can generate the user-item relevancy score using explicit user scores (for example, a given digital item 144 can be scored by the users 142 on a pre-determined scale, such as 1-5, 1-10, A to C, and the like). Alternatively, the user-item relevancy score can be calculated based on a weighted algorithm. Alternatively, the user-item relevancy scores can be determined by a machine learning algorithm (not depicted), by analyzing one or more dimensions of the user interaction (such as dwell time, number of shares, etc.).

A given cell 412 and a given cell 414 do not contain any values. As such, it can be said that the user "User 1" has not interacted with the digital item "Item 4" (resulting the in the given cell 412 being empty) and that the user "User 3" has not interacted with the digital item "Item 6" (resulting the in the given cell 414 being empty). Thus, it the illustration of Figure 4 demonstrates how the matrix of user-item relevance scores 400 can be "sparse". For the avoidance of doubt, the term "sparse" refers to the fact that certain cells (i.e. the given cell 422, the given cell 414, amongst others) are empty (i.e. not containing any user-item relevancy score). The emptiness of the cells is attributable to the lack of user-item interactions between the associated user and the associated digital item.

The recommended content selection module 116 is further configured to factorize the matrix of user-item relevance scores 400 into a user matrix and an item matrix. With reference to Figure 5, there is depicted a schematic illustration of the factorizing of the matrix of user-item relevance scores 400 into a user matrix 502 and an item matrix 504. In some embodiments of the present technology, the recommended content selection module 116 can execute the SVD algorithm to split the matrix of user-item relevance scores 400 into the user matrix 502 and the item matrix 504. More particularly, the SVD can use the above-mentioned Formula 1 to split the matrix of user-item relevance scores 400 into the user matrix 502 and the item matrix 504.

In some embodiments of the present technology, in order to execute a decomposition analysis, the recommended content selection module 116 can execute the ALS algorithm to factorize the matrix of user-item relevance scores 400. In some embodiments, of the present technology, the ALS uses Formula 2 to represent the matrix of user-item relevance scores 400:

$$R \approx UV^T \qquad \text{(Formula 2)}$$

In accordance with the implementations of the ALS techniques using Formula 2, the initial version of the user matrix 502 (denoted by "U") and the initial version of the item matrix 504 (denoted by "V") are created (i.e. "initialization" is executed by the recommended content selection module 116).

The user matrix 502 (denoted by "U") can be initialized in accordance with known techniques. For example, the recommended content selection module 116 can initialize the user matrix 502 using values of the user-vectors that are either randomly populated or populated with zeros (or a mix of the two approached). In other words, the recommended content selection module 116 can generate the initial values the user-vectors for the of the user matrix 502 as random numbers or as zeros (or a mix of the two approached).

In accordance with embodiments of the present technology, the recommended content selection module 116 is further configured to initialize the item matrix 504 using item vectors, the item vectors having been generated such that digital items with similar content have similar item vectors. It should now be recalled that in some embodiments of the present technology, the digital item 144 can be a text-based digital item 144. In those embodiments, the recommended content selection module 116 is further configured to initialize the item matrix 504 using item vectors, the item vectors having been generated such that items with similar textual content have similar item vectors. In some embodiments of the present technology, the recommended content selection module 116 is configured to generate item vectors using a word embedding technique. Without being limitative, the used word embedding technique can be at least one of word2vec technique and Latent Dirichlet Allocation (LDA) technique.

The recommended content selection module 116 is further configured to iteratively optimize the initial version of the user matrix 502 and the initial version of the item matrix 504. In order to do so, the recommended content selection module 116 is configured to iteratively: (i) first fix the user matrix 502 and adjust the item matrix 504 and (ii) then fix the item matrix 504 and adjust the user matrix 502 (a "single iteration"). After each single iteration, the factorization of the user matrix 502 and the item matrix 504 becomes closer to the matrix of the user-item relevance scores 400. In some embodiments of the present technology, the recommended content selection module 116 is configured to continue iteratively optimization until a pre-determined value of a pre-determined metric is obtained. In a specific implementation, the pre-determined metric is Root Mean Square Deviation (RMSE). The pre-determined value of the RMSE that triggers ceasing of the execution of the iterative optimization can be empirically determined. In alternative embodiments of the present technology, the pre-determined metric can be Mean Absolute Error (MAR). The pre-determined value of the MAR that triggers ceasing of the execution of the iterative optimization can be empirically determined.

Once the optimization of the item matrix 504 is completed (to derive an optimized item matrix 504), the recommended content selection module 116 is configured to store the optimized item matrix 504 in the data storage device 118. The recommended content selection module 116 can be further configured to discard the user matrix 502.

In accordance with embodiments of the present technology, the so stored optimized item matrix 504 can be used by the recommended content selection module 116 to select recommended content for the user 102.

More specifically, upon receiving, from the electronic device 104, the request for the content recommendation 150, the recommended content selection module 116 is configured to retrieve a user profile associated with the electronic device 104. In a specific embodiment, the recommended content selection module 116 retrieves the user profile associated with the electronic device 104 from the data storage device 118. In other embodiments, the recommended content selection module 116 is configured to acquire the user profile associated with the electronic device 104 from another source (not depicted), such as a targeting profile database or the like.

In some embodiments of the present technology, the user profile is a vector generated based on the user's browsing history. How the recommended content selection module 116 generates the vector based on the user's browsing history is not particularly limited. An example of such a technique is described in co-owned Russian patent application entitled **"METHOD OF AND SYSTEM FOR PROCESSING ACTIVITY INDICATIONS ASSOCIATED WITH A USER",** bearing an application number 2015111633 and filed on March 31, 2015; content of which is incorporated herein by reference in its entirety.

Then, based on the user profile, the recommended content selection module 116 selects at least one recommended content item. It is noted that the recommended content selection module 116 selects the recommended content item using the optimized item matrix 504 that is stored in the data storage device 118.

More specifically, the recommended content selection module 116 is configured to restore the user-item matrix of user-item relevance scores 400 using optimized item matrix 504 and the user profile to generate a restored user-item matrix of user-item relevance scores 400. In accordance with embodiments of the present technology, the recommended content selection module 116 restores the restored user-item matrix of user-item relevance scores 400 such that each user-item pair of the restored user-item matrix of user-item relevance scores 400 is associated with a respective user-item relevance score, the respective user-item relevance score being representative of a relevancy of the given digital item 144 to the given user 142 (in this example, the user 102).

How the recommended content selection module 116 selects a particular digital item 144 for the user 102 is not particularly limited. An example of the machine learning algorithm that can be used by the recommended content selection module 116 is disclosed in a co-owned Russian Patent Application entitled: **"METHOD AND APPARATUS FOR GENERATING A RECOMMENDED CONTENT LIST"** and bearing an application number 2015136684 filed on August 22, 2015; content of which is incorporated herein by reference in its entirety.

Naturally, the recommended content selection module 116 can select more than one digital item 144 for the user 102. For example, the recommended content selection module 116 can select a plurality of digital items 144 to be used as a set of recommended digital items 144 for the user 102. Once the recommended content selection module 116 generates the set of digital items 144 for the user 102, the recommended content selection module 116 generates a recommended content message 152 and transmits same to the electronic device 104.

When the electronic device 104 receives the recommended content message 152, the recommendation application 106 processes content thereof and displays the recommended content items on the recommendation interface 108. How the recommendation interface 108 is implemented is not particularly limited - the recommendation interface 108 depicted in Figure 2 can be used. As another example, the recommendation interface 108 can be implemented as disclosed in the co-owned Russian Patent Application entitled: **"METHOD OF AND SYSTEM FOR INTERACTING WITH A CONTENT ELEMENT OF A CONTENT STREAM"** and bearing an application number 2015141291 filed on September 29, 2015; content of which is incorporated herein by reference in its entirety.

Given the architecture and examples provided herein above, it is possible to execute a method of a training machine learning algorithm (MLA) for selecting recommended content for a user of an electronic device.

Figure 6 depicts a block diagram of a method 600, the method 600 executable in accordance with non-limiting embodiments of the present technology. The method 600 can be executed on the recommendation server 112 and, more specifically, using the recommended content selection module 116.

**602 - acquiring an indication of a plurality of user-item interactions, each user-item interaction being associated with a user and a digital item**

The method 600 starts at step 602, where the recommended content selection module 116 acquires an indication of a plurality of user-item interactions 140, each user-item interaction 140 being associated with a user 142 and a digital item 144.

In some implementations of the method 600, the step acquiring an indication of the plurality of user-item interactions 140 comprises retrieving the indication of the plurality of user-item interactions from user browsing histories. The user-item interaction comprises at least one of: time spent interacting with the digital item, downloading the digital item, sharing the digital item, reposting the digital item, bookmarking the digital item, uploading a comment associated with the digital item, liking the digital item, and updating the digital item.

**604 - based on the plurality of user-item interactions, generating a matrix of user-item relevance scores**

At step 604, the recommended content selection module 116, based on the plurality of user-item interactions 140, generates a matrix of user-item relevance scores 400.

**606 - factorizing the matrix of user-item relevance scores into a user matrix and an item matrix, said factorizing including: initializing the item matrix using item vectors, the item vectors having been generated such that digital items with similar content have similar item vectors, initializing the user matrix with user-vectors**

At step 606, the recommended content selection module 116 factorizes the matrix of user-item relevance scores 400 into a user matrix 502 and an item matrix 504. In accordance with embodiments of the present technology, the step of factorizing includes: initializing the item matrix 504 using item vectors, the item vectors having been generated such that digital items with similar content have similar item vectors. The recommended content selection module 116 further initializes the user matrix 502 with user-vectors.

In some implementations of the method 600, the step of initializing the user matrix 502 with user-vectors comprises populating the user matrix 502 using random initial user-vector values.

In some implementations of the method 600, the step initializing the user matrix with user-vectors comprises populating the user matrix using initial user-vector values being zero.

In some implementations of the method 600, the digital item is a text-based digital item and the item vectors have been generated using a word embedding technique. The step of generating the item vectors can be implemented using the word embedding technique, the word embedding technique being at least one of word2vec technique and Latent Dirichlet Allocation (LDA) technique.

In some implementations of the method 600, the step of the factorizing is executed using Singular Value Decomposition (SVD) analysis. The factorizing further comprises a decomposition analysis, the decomposition analysis being executed using an Alternating Least Squares (ALS) algorithm.

**608 - iteratively optimizing of the user matrix and the item matrix**

At step 608, the recommended content selection module 116 iteratively optimizing of the user matrix 502 and the item matrix 504.

In some embodiments of the method 600, the step of the iteratively optimizing of the user matrix 502 and the item matrix 504 is executed until a pre-determined value of a pre-determined metric is obtained. The pre-determined metric can be (but is not limited to): Root Mean Square Deviation (RMSE) or Mean Absolute Error (MAR).

**610 - storing the optimized item matrix**

At step 610, the recommended content selection module 116 stores the optimized item matrix 504.

In some implementations of the method 600, after completing iteratively optimizing, the user matrix 502 is discarded.

Use of the optimized item matrix 504 to select recommended digital item 144

As has been alluded to above, once the recommended content selection module 116 stores the optimized item matrix 504, the optimized item matrix 504 can be used to generate recommended digital item 144 for the user 102. To that end, the method 600 further comprises: upon receiving, from the electronic device 104, a request for content recommendation 150, retrieving a user profile associated with the electronic device 104; and selecting at least one recommended content item 144, the selecting being made on the basis of a user profile and the optimized item matrix 504.

In some implementations of the method, the step of selecting comprises restoring a matrix of user-item relevance scores 400 using the optimized item matrix 504 and the user profile to generate a restored matrix of user-item relevance scores 400.

In some implementations of the method, each user-item pair of the restored matrix of user-item relevance scores 400 is associated with a respective user-item relevance score, the respective user-item relevance score being representative of a relevancy of a given digital item 144 to the user 102.

In some implementations of the method, the user profile is a vector generated based on the user's browsing history.

It should be expressly understood that not all technical effects mentioned herein need to be enjoyed in each and every embodiment of the present technology. For example, embodiments of the present technology may be implemented without the user enjoying some of these technical effects, while other embodiments may be implemented with the user enjoying other technical effects or none at all.

Modifications and improvements to the above-described implementations of the present technology may become apparent to those skilled in the art. The foregoing description is intended to be exemplary rather than limiting. The scope of the present technology is therefore intended to be limited solely by the scope of the appended claims.

**Claims**

1. A method (600) for training a machine learning algorithm for selecting recommended content for a user (102) of an electronic device (104), the method executable by a recommendation server (112) accessible by the electronic device via a communication network (110), the recommendation server executing the machine learning algorithm, once trained; the method comprising:

   acquiring (602) an indication of a plurality of user-item interactions (140), each user-item interaction being associated with a user (142) and a digital item (144);
   based on the plurality of user-item interactions, generating (604) a matrix of user-item relevance scores (400);
   factorizing (606) the matrix of user-item relevance scores into a user matrix (502) and an item matrix (504), said factorizing including:

   initializing the item matrix using item vectors, the item vectors having been generated such that digital items with similar content have similar item vectors, initializing the user matrix with user-vectors;

   iteratively optimizing (608) the user matrix and the item matrix; and
   storing (610) the optimized item matrix.

2. The method of claim 1, further comprising:

   upon receiving, from the electronic device, a request for content recommendation (150), retrieving a user profile associated with the electronic device; and
   selecting at least one recommended content item (144), the selecting being made on the basis of a user profile and the optimized item matrix.

3. The method of claim 2, wherein said selecting comprises restoring a user-item matrix of scores using optimized item matrix and the user profile to generate a restored user-item matrix.

4. The method of claim 3, wherein each user-item pair of the restored user-item matrix is associated with a respective user-item relevance score, the respective user-item relevance score being representative of a relevancy of a given digital item to the user.

5. The method of claim 2, wherein the user profile is a vector generated based on the user's browsing history.

6. The method of any one of claims 1 to 5, wherein said initializing the user matrix with user-vectors comprises populating the user matrix using random initial user-vector values.

7. The method of any one of claims 1 to 5, wherein said initializing the user matrix with user-vectors comprises populating the user matrix using initial user-vector values being zero.

8. The method of any one of claims 1 to 7, wherein after said iteratively optimizing, the user matrix is discarded.

9. The method of any one of claims 1 to 8, wherein the digital item is a text-based digital item and wherein the item vectors have been generated using a word embedding technique being at least one of word2vec technique and Latent Dirichlet Allocation (LDA) technique.

10. The method of any one of claims 1 to 9, wherein the factorizing is executed using Singular Value Decomposition (SVD) analysis, and wherein the factorizing further comprises a decomposition analysis, the decomposition analysis being executed using an Alternating Least Squares (ALS) algorithm.

11. The method of any one of claims 1 to 10, wherein said acquiring an indication of the plurality of user-item interactions comprises retrieving the indication of the plurality of user-item interactions from user browsing histories.

12. The method of claim 11, wherein the user-item interaction comprises at least one of: time spent interacting with the digital item, downloading the digital item, sharing the digital item, reposting the digital item, bookmarking the digital item, uploading a comment associated with the digital item, liking the digital item, and updating the digital item.

**13.** The method of any one of claims 1 to 12, wherein the iteratively optimizing of the user matrix and the item matrix is executed until a pre-determined value of a pre-determined metric is obtained.

**14.** The method of claim 13, wherein the pre-determined metric is one of: Root Mean Square Deviation (RMSE) and Mean Absolute Error (MAR).

**15.** A server (112) comprising:

a data storage medium (118);
a network interface configured for communication over a communication network;
a processor (114) operationally coupled to the data storage medium and the network interface, the processor configured to:

acquire an indication of a plurality of user-item interactions (140), each user-item interaction being associated with a user (142) and a digital item (144);
based on the plurality of user-item interactions, generate a matrix of user-item relevance scores (400);
factorize the matrix of user-item relevance scores into a user matrix (502) and an item matrix (504), said factorizing including:

initializing the item matrix using item vectors, the item vectors having been generated such that digital items with similar content have similar item vectors,
initializing the user matrix with user-vectors;

iteratively optimize the user matrix and the item matrix; and
store the optimized item matrix in the data storage medium (118).

FIG. 1

108

86% 21:32

206

208

YANDEX

Z

OPTIMUM

TOM.LIVEJO...

212

JERRY.LIVEJO...

YOUTUBE

210

CLAY.LIVEJO...

TRAVELZOO

218

214

CURABITUR LACUS

SUSPENDISSE MAXIMUS
LECTUS EU LIBERO
ULLAMCPR[ER RHONCUS

YAHOO.COM

SHELBY OFFERS
"DISAPPOINTED"
CUSTOMERS A

202

216

Z    SEARCH OR ENTER A WEB SITE ADDRESS

204

# FIG. 2

EP 3 293 646 A1

**FIG. 3**

EP 3 293 646 A1

| | Item 1 | Item 2 | Item 3 | Item 4 | Item 5 | Item 6 |
|---|---|---|---|---|---|---|
| User 1 | 5 | 4 | 5 | | | |
| User 2 | 4 | | 5 | | | |
| User 3 | | 3 | 5 | | 4 | |
| User 4 | | | | 3 | 4 | |
| User 5 | | | 4 | 2 | 4 | |
| User 6 | 3 | | | | | 5 |

**FIG. 4**

EP 3 293 646 A1

DIGITAL ITEMS

USERS "R"

≈

d

USERS "U"

d

DIGITAL ITEMS

"V"

400

502

504

## FIG. 5

<u>600</u>

BEGIN

ACQUIRING AN INDICATION OF A PLURALITY OF USER-ITEM INTERACTIONS, EACH USER-ITEM INTERACTION BEING ASSOCIATED WITH A USER AND A DIGITAL ITEM ⟋602

BASED ON THE PLURALITY OF USER-ITEM INTERACTIONS, GENERATING A MATRIX OF USER-ITEM RELEVANCE SCORES ⟋604

FACTORIZING THE MATRIX OF USER-ITEM RELEVANCE SCORES INTO A USER MATRIX AND AN ITEM MATRIX, THE FACTORIZING INCLUDING:

INITIALIZING THE ITEM MATRIX USING ITEM VECTORS, THE ITEM VECTORS HAVING BEEN GENERATED SUCH THAT ITEMS WITH SIMILAR CONTENT HAVE SIMILAR ITEM VECTORS,

INITIALIZING THE USER MATRIX WITH USER-VECTORS ⟋606

ITERATIVELY OPTIMIZING THE USER MATRIX AND THE ITEM MATRIX ⟋608

STORING THE OPTIMIZED ITEM MATRIX ⟋610

END

*FIG. 6*

Europäisches
Patentamt

European
Patent Office

Office européen
des brevets

# EUROPEAN SEARCH REPORT

Application Number

EP 17 18 9557

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 2012/030159 A1 (PILASZY ISTVAN [HU] ET AL) 2 February 2012 (2012-02-02)<br>* paragraph [0073] - paragraph [0074] *<br>* claims 1, 35-37 *<br>* figure 1 *<br>* paragraph [0007] *<br>* paragraph [0014] *<br>* paragraph [0019] *<br>* paragraph [0023] *<br>* paragraph [0031] *<br>* paragraph [0071] *<br>* paragraph [0166] *<br>* paragraph [0201] * | 1-15 | INV.<br>G06F17/30 |
| X | YEHUDA KOREN ET AL: "Matrix Factorization Techniques for Recommender Systems", COMPUTER, vol. 42, no. 8, 1 August 2009 (2009-08-01) , pages 30-37, XP055432785, USA ISSN: 0018-9162, DOI: 10.1109/MC.2009.263<br>* page 42 - page 45 * | 1-15 | |
| X | YAO XIAO ET AL: "Research and Implementation of Hybrid Recommendation Algorithm Based on Collaborative Filtering and Word2Vec", 2015 8TH INTERNATIONAL SYMPOSIUM ON COMPUTATIONAL INTELLIGENCE AND DESIGN (ISCID), 1 December 2015 (2015-12-01), pages 172-175, XP055433226, DOI: 10.1109/ISCID.2015.211 ISBN: 978-1-4673-9587-8<br>* page 172 - page 173 * | 1-15 | TECHNICAL FIELDS SEARCHED (IPC)<br><br>G06F |

-/--

The present search report has been drawn up for all claims

| Place of search | Date of completion of the search | Examiner |
|---|---|---|
| The Hague | 11 December 2017 | Natanni, Francesco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt

European
Patent Office

Office européen
des brevets

## EUROPEAN SEARCH REPORT

Application Number

EP 17 18 9557

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 2015/052003 A1 (TANG LEI [US] ET AL) 19 February 2015 (2015-02-19) * the whole document * ----- | 1-15 | |
| A,D | US 2014/129500 A1 (NICE NIR [IL] ET AL) 8 May 2014 (2014-05-08) * the whole document * ----- | 1-15 | |

TECHNICAL FIELDS
SEARCHED      (IPC)

The present search report has been drawn up for all claims

| Place of search | Date of completion of the search | Examiner |
|---|---|---|
| The Hague | 11 December 2017 | Natanni, Francesco |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## EP 3 293 646 A1

### ANNEX TO THE EUROPEAN SEARCH REPORT
### ON EUROPEAN PATENT APPLICATION NO.

EP 17 18 9557

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2017

| Patent document cited in search report | Publication date | Patent family member(s) | Publication date |
|---|---|---|---|
| US 2012030159 A1 | 02-02-2012 | NONE | |
| US 2015052003 A1 | 19-02-2015 | US 2015052003 A1<br>US 2017148085 A1 | 19-02-2015<br>25-05-2017 |
| US 2014129500 A1 | 08-05-2014 | US 2014129500 A1<br>WO 2014074739 A2 | 08-05-2014<br>15-05-2014 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150052003 A
- US 8983888 B
- US 8676736 B
- RU 2016118519
- RU 2015111633
- RU 2015136684
- RU 2015141291